# EUROPEAN PATENT SPECIFICATION

(11) **EP 3 683 009 B1**
(45) Date of publication and mention of the grant of the patent: **22.11.2023**
(21) Application number: 17925242.4
(22) Date of filing: 13.09.2017
(51) Int. Cl.: B23Q 1/01, B23Q 1/54

(54) **HORIZONTAL MACHINING CENTRE**
HORIZONTALES BEARBEITUNGSZENTRUM
CENTRE D'USINAGE HORIZONTAL

(43) Date of publication of application: 22.07.2020
(73) Proprietor: Makino Milling Machine Co., Ltd., Tokyo 152-8578 (JP)
(72) Inventor: IDO, Kazuya, Yamanashi 401-0310 (JP); YONEMITSU, Yuichi, Yamanashi 401-0310 (JP); SUGIYAMA, Naokazu, Yamanashi 401-0310 (JP); SUMITA, Naoya, Yamanashi 401-0310 (JP)
(74) Representative: McWilliams, David John
(86) International application number: PCT/JP2017/033112
(87) International publication number: WO 2019/053830

(56) References cited:
- CN-A- 105 817 910
- DE-A1-102007 034 104
- GB-A- 2 130 128
- JP-A- H1 043 975
- JP-A- S6 186 144
- JP-A- H10 277 857
- JP-A- S58 171 229

## Description

### FIELD

The present application relates to a horizontal machining centre including three mutually orthogonal linear feed axes and at least two rotary feed axes.

### BACKGROUND

In machine tools, in general, it is always desirable to improve rigidity. For example, Patent Literature 1 discloses a structure for improving the rigidity of a table of a five-axis machine tool. In this structure, a saddle is provided facing a column including a horizontal spindle head. An inclined surface which is inclined with respect to the axis of the spindle head is formed on the saddle. A support is provided on the inclined surface. The support can rotate about an inclination axis which is inclined with respect to the axis of the spindle head. A workpiece table is provided on the support. The workpiece table can rotate about an axis inclined with respect to the axis of rotation of the support. According to such a structure, the rigidity of the table is improved as compared to a trunnion structure having a tilting table which is rotatable about a horizontal axis.

Furthermore, Patent Literature 2, for example, discloses a structure for improving the rigidity of a column. In this structure, the column moves in the X-axis direction. The column is configured so as to be moved by two guide rails and a ball screw arranged between the guide rails. The two guide rails are arranged so that there is a difference in height between the guide rails. In other words, the guide rail distant from workpiece transfer means is arranged higher as compared to the guide rail close to the workpiece transfer means. According to this structure, the ball screw is arranged higher, and thus, the ball screw is arranged in a position close to the center of gravity of the column. Thus, when the column is moved at a high acceleration, the inertial force acting on the column is reduced.

### [CITATION LIST]

### [PATENT LITERATURE]

[PTL 1] Japanese Unexamined Patent Publication (Kokai) No. H7-88737
[PTL 2] Japanese Patent No. 3725625
[PTL 3] A known example of a high-precision horizontal machining centre tool is described in CN105817910 A.

### SUMMARY

### [TECHNICAL PROBLEM]

In machine tools, there continues to be a need for the development of structures with which rigidity can be improved and the linear and rotary feed axes can be driven deftly.

### [SOLUTION TO PROBLEM]

An aspect of the present disclosure provides a horizontal machining centre as defined in claim 1.

In the horizontal machining centre according to the aspect of the present disclosure, the inclined linear motion guide of the column and the inclined rotational motion guide of the table are arranged so as to face each other in the frontward and rearward direction. Thus, when a workpiece is machined, the machining reactive force occurring between the spindle and the table can be received by the inclined linear motion guide and the inclined rotational motion guide opposite thereto, whereby high rigidity and a well-balanced machine configuration can be obtained.

The second table base may rotate on the first table base in a C-axis direction about the inclination axis.

A center of gravity of the sum of the second table base and a load on the second table base may be positioned on the inclination axis or in the vicinity of the inclination axis. In this case, since the distance from the inclination axis to the center of gravity is small, the rotational inertia about the inclination axis is reduced. Thus, C-axis directional movement can be deftly controlled. Furthermore, a small motor may be used for rotating the second table base.

At least one of an acceleration and jerk of the left and right movements of the column may be set to a reference value when the vertical position of the spindle is higher than a predetermined vertical position, and to a value higher than the reference value when the vertical position of spindle is lower than the predetermined vertical position. In the case in which the spindle is in a lower position when the column moves, a smaller impact is exerted on the column. Thus, by controlling at least one of the acceleration and the jerk of the column in accordance with the height of the spindle, the impact and vibration exerted on the column are reduced, and the acceleration/deceleration time of the column is shortened.

At least one of an acceleration and jerk of the frontward and rearward movements of the first table base may be set to a reference value when the second table base is in a higher center of gravity position, and to a value higher than the reference value when the second table base is in a lower center of gravity position.. In this case, the impact and vibration exerted on the table are reduced, and the acceleration/deceleration time of the table is shortened.

### [ADVANTAGEOUS EFFECTS OF INVENTION]

According to the aspect of the present disclosure, there can be provided a horizontal machining centre with which rigidity can be improved and the linear and rotary feed axes can be driven deftly.

### BRIEF DESCRIPTION OF DRAWINGS

FIG. 1 is a schematic view of a horizontal machining centre according to a first embodiment.
FIG. 2 is a schematic view showing another state of the horizontal machining centre of FIG. 1.
FIG. 3 is a right-side view showing the horizontal machining centre of FIG. 1 during machining.
FIG. 4 illustrates graphs representing feed speed of the column.
FIG. 5 is a right-side view of a horizontal machining centre according to a second embodiment.
FIG. 6 is a right-side view of a machine tool not falling under the scope of the claims.

### DESCRIPTION OF EMBODIMENTS

The horizontal machining centres according to the embodiments will be described below with reference to the attached drawings. Identical or corresponding elements have been assigned the same reference signs, and duplicate descriptions thereof have been omitted. In order to facilitate understanding, the scales of the drawings may be modified in some cases.

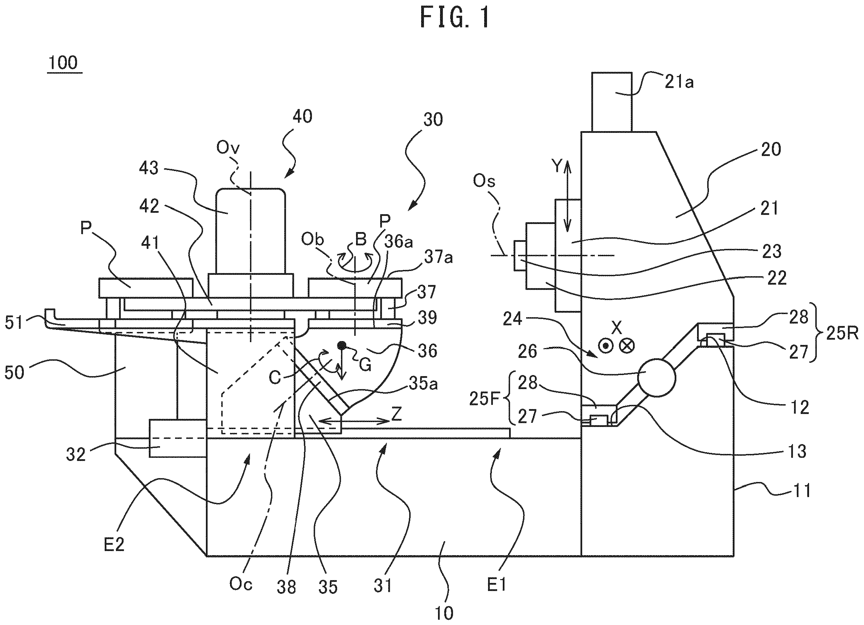

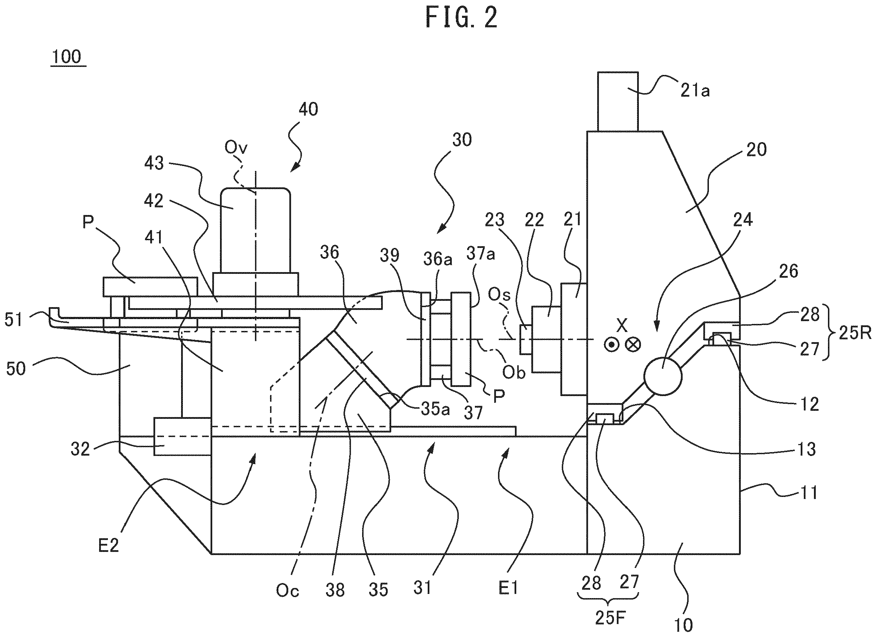

FIG. 1 is a schematic view of a horizontal machining centre according to a first embodiment, and illustrates a state in which a table 30 is in a pallet exchange position, and a workpiece attachment surface 37a of a pallet P, as a workpiece mount, is in a horizontal posture. FIG. 2 is a schematic view illustrating another state of the horizontal machining centre of FIG. 1, and illustrates a state in which the table 30 is in a machining position, and the workpiece attachment surface 37a of the pallet P is in a vertical posture. In the present embodiment, the horizontal machining centre 100 is a five-axis horizontal machining centre including three translational feed axes (X-axis, Y-axis, and Z-axis) and two rotary feed axes (C-axis and B-axis). The horizontal machining centre 100 includes a bed (also referred to as a base) 10, a column 20, a table (also referred to as a moving body) 30, a pallet exchange device 40, and a pallet loading station 50.

The bed 10 may be affixed to, for example, the floor or the like of a factory. The column 20 is provided on the bed 10 along a rear surface 11 of the bed 10. A saddle 21 which can move in the vertical direction is provided on the front surface of the column 20. A spindle head 22 protrudes in the horizontal direction from a front surface of the saddle 21, and a spindle 23 is supported by the spindle head 22 so as to be rotatable about a horizontal axis of rotation Os.

Regarding the directions of the horizontal machining centre 100 according to the present embodiment, the axis of rotation Os of the spindle 23 runs along the horizontal direction, and the direction parallel to the axis of rotation Os is defined as the Z-axis direction (also referred to as the forward and rearward directions). The direction in which the spindle 23 protrudes along the Z-axis direction is referred to as forward, and the direction opposite thereto is referred to as rearward. The horizontal direction, which is orthogonal to the Z-axis direction, is defined as the X-axis direction (also referred to as the left and right directions), and the vertical direction is defined as the Y-axis direction (also referred to as the upward and downward directions).

The saddle 21 is moved in the Y-axis direction by a feed device including a ball screw connected to a motor 21a, and is guided by an unillustrated guide. The ball screw includes a threaded shaft which is rotatably supported on the column 20 and which extends in the Y-axis direction, and a nut affixed to the saddle 21. The nut is moved in the Y-axis direction by the rotation of the threaded shaft by the motor 21a, and thus, the saddle 21 is moved in the Y-axis direction. Y-axis direction feeding is controlled by an NC device.

The column 20 moves on the bed 10 in the X-axis direction. Specifically, the column 20 is guided in the X-axis direction by an inclined linear motion guide 24. The inclined linear motion guide 24 is, overall, forwardly and upwardly inclined so that the rear part thereof is positioned higher than the front part thereof. Specifically, the inclined linear motion guide 24 includes a front guide 25F and a rear guide 25R. The front guide 25F and the rear guide 25R each include a rail 27 which is affixed to the bed 10 and which extends in the X-axis direction, and a block 28 which is affixed to the column 20.

The rear guide 25R is arranged in a position higher than the front guide 25F. From another point of view, the guide 25R, which is distant from the table 30, is arranged in a higher position than the guide 25F, which is close to the table 30. Specifically, the bed 10 includes a rear rail support surface 12 facing upward along a rear surface 11. Furthermore, the bed 10 includes a front rail support surface 13 facing upward in front of the rear rail support surface 12, and the rear rail support surface 12 is formed in a position higher than the front rail support surface 13. In another embodiment, at least one of the rear rail support surface 12 and the front rail support surface 13 may face forward. A rail 27 of the rear guide 25R is arranged on the rear rail support surface 12, and a rail 27 of the front guide 25F is arranged on the front rail support surface 13.

The column 20 is moved in the X-axis direction by a feed device including a ball screw connected to a motor 26. The ball screw is arranged between the front guide 25F and the rear guide 25R. The ball screw includes a threaded shaft which is rotatably supported on the bed 10 and which extends in the X-axis direction, and a nut which is affixed to the column 20. The nut is moved in the X-axis direction by the rotation of the threaded shaft by the motor 26, and thus, the column 20 is moved in the X-axis direction. The X-axis direction feeding is controlled by the NC device.

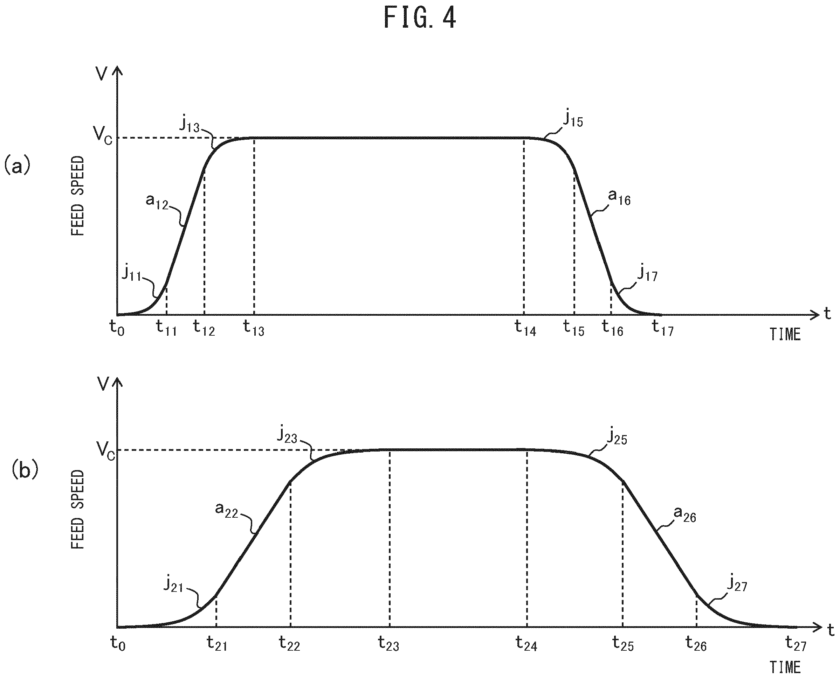

In the horizontal machining centre 100, the acceleration and jerk of the left and right (X-axis) movement of the column 20 are controlled in accordance with the height (the position in the Y-axis direction) of the spindle 23. FIG. 4 illustrates graphs representing the feed speed of the column, (a) shows the feed speed of the column 20 in the left and right directions when the spindle 23 is positioned at a lower height, and (b) shows the feed speed of the column 20 in the left and right directions when the spindle 23 is positioned at a higher height.

For example, when the stroke of the spindle 23 in the Y-axis direction is 750 mm and the lowest end of the stroke is defined as 0 mm, the range of 0 mm ≤ Y ≤ 350 mm can be defined as lower positions, and the range of 350 mm < Y ≤ 750 mm can be defined as higher positions. When the spindle 23 is at a relatively low position (0 mm ≤ Y ≤ 350 mm), the impact caused by the inertia acting on the column 20 when the column 20 is translationally moved is smaller. Thus, when the spindle 23 is at a lower position (0 mm ≤ Y ≤ 350 mm), the magnitudes (absolute values) of the acceleration and jerk of the column 20 can be set to values greater than reference values, and when the spindle 23 is at a higher position (350 mm < Y ≤ 750 mm), the magnitudes of the acceleration and jerk of the column 20 can be set to the reference values. With such a configuration, when the spindle 23 is at a higher position, the impact and vibration imparted to the column 20 are reduced, and when the spindle 23 is at a lower position, the acceleration/deceleration time of the column 20 is shortened. The specific values of the stroke and positions of the column described above are merely exemplary, and it should be understood that the stroke and positions may be other values.

Specifically, in, for example, each of FIGS. 4(a) and (b), the column 20 is moved at a commanded speed Vc. As shown in FIGS. 4(a) and (b), the column 20, when accelerating, for example, is first accelerated while acceleration is increased at j erks j₁₁, j₂₁, next, is accelerated at constant accelerations a₁₂, a₂₂, and is then accelerated to a constant speed Vc while acceleration is decreased at jerks j₁₃, j₂₃.

Furthermore, during, for example, deceleration, the column 20 is decelerated while the acceleration is reduced at jerks j₁₅, j₂₅ (the magnitude (absolute value) of the acceleration is increased), next is decelerated at constant negative accelerations a₁₆, a₂₆, and is then decelerated until stopped while acceleration is increased at jerks j₁₇, j₂₇ (the magnitude (absolute value) of the acceleration is decreased).

During acceleration and deceleration as described above, the magnitudes of the accelerations a₁₂, a₁₆ and the jerks j₁₁, j₁₃, j₁₅, and j₁₇ (FIG. 4(a)) when the spindle 23 is in a lower position are larger than the magnitudes of the corresponding accelerations a₂₂, a₂₆ and the jerks j₂₁, j₂₃, j₂₅, and j₂₇ (FIG. 4(b)) when the spindle 23 is in a higher position. In accordance with the Y-axis position of the spindle 23, the acceleration and jerk are switched and controlled between the two values shown in FIGS. 4(a) and 4(b). Further, instead of the binary switching control, acceleration and jerk may be continuously variable based on interpolation or a function.

The table 30 is provided on the bed 10 in front of the column 20. The table 30 supports the pallet P (or the workpiece when the workpiece is directly attached to the table 30). The table 30 moves on the bed 10 in the Z-axis direction along a pair of left and right guides 31 arrayed in the X-axis direction. Each of the guides 31 includes a rail which is affixed to the bed 10 and which extends in the Z-axis direction, and a block which is affixed to the table 30. A ball screw connected to a motor 32 is arranged between the guides 31. The ball screw includes a threaded shaft which is rotatably supported on the bed 10 and which extends in the Z-axis direction, and a nut which is affixed to the table 30. The nut is moved in the Z-axis direction by the rotation of the threaded shaft by the motor 32, and thus, the table 30 is moved in the Z-axis direction. The Z-axis feeding is controlled by the NC device. The table 30 moves between a rear stroke end E1 and a front stroke end (the pallet exchange position in the present embodiment) E2. In FIG. 1, the table 30 is in the pallet exchange position. Referring to FIG. 2, the table 30 is in a machining position in FIG. 2. The machining position may be set to, for example, a position spaced by a predetermined distance or more from the front stroke end E2.

The table 30 includes a first table base 35, a second table base 36, and a pallet attachment base 37. The first table base 35 is provided on the bed 10 and moves on the bed 10 in the Z-axis direction. The block of the guide 31 described above is affixed to the first table base 35.

The first table base 35 includes an inclined surface 35a which is inclined with respect to the movement direction of the table 30. Specifically, the inclined surface 35a is inclined by 45° or approximately 45° from the horizontal so as to be inclined rearwardly and upwardly.

The first table base 35 includes an inclined rotational motion guide 38 along the inclined surface 35a. Thus, the inclined rotational motion guide 38 faces rearwardly and upwardly, and the front part thereof is arranged at a position higher than the rear part thereof. The inclined rotational motion guide 3 8 rotates the second table base 36 about the inclination axis Oc which is orthogonal to the inclined surface 35a (i.e., orthogonal to the inclined rotational motion guide 38). The direction of rotational motion of the second base 36 is defined as the C-axis direction. The inclined rotational motion guide 38 has, for example, a crossed roller bearing, and the second table base 36 is rotated by, for example, a motor or hydraulic device. The C-axis direction feeding is controlled by the NC device.

The second table base 36 is provided on the inclined rotational motion guide 38. The second table base 36 includes a rotating surface 36a. The rotating surface 36a is inclined by 45° or approximately 45° from the inclined surface 35a. The rotating surface 36a rotates about the inclination axis Oc as the second table base 36 rotates.

The second table base 36 includes a pallet rotation guide 39 along the rotating surface 36a. The pallet rotation guide 39 rotates the pallet attachment base 37 about a variable axis Ob, which is orthogonal to the rotating surface 36a. Note that with reference to FIGS. 1 and 2, it should be understood that the orientation of the variable axis Ob changes in accordance with the position of the second table base 36 in the C-axis direction. With reference to FIG. 1, the direction of the rotational feeding of the pallet rotation guide 39 is defined as the B-axis direction. The pallet rotation guide 39 includes, for example, a roller bearing, and is rotationally driven by, for example, a motor or a hydraulic device. The B-axis direction feeding is controlled by the NC device.

The pallet attachment base 37 houses a pallet clamping device, and is provided on the pallet rotation guide 39. The pallet P mounted on the pallet attachment base 37 includes a workpiece attachment surface 37a which is parallel to the rotating surface 36a. The workpiece is attached to the workpiece attachment surface 37a. The workpiece attachment surface 37a is oriented in an arbitrary posture in accordance with the position of the second table base 36 in the C-axis movable range. For example, in FIG. 1, the workpiece attachment surface 37a is in a horizontal posture, and in FIG. 2, the workpiece attachment surface 37a is in a vertical posture.

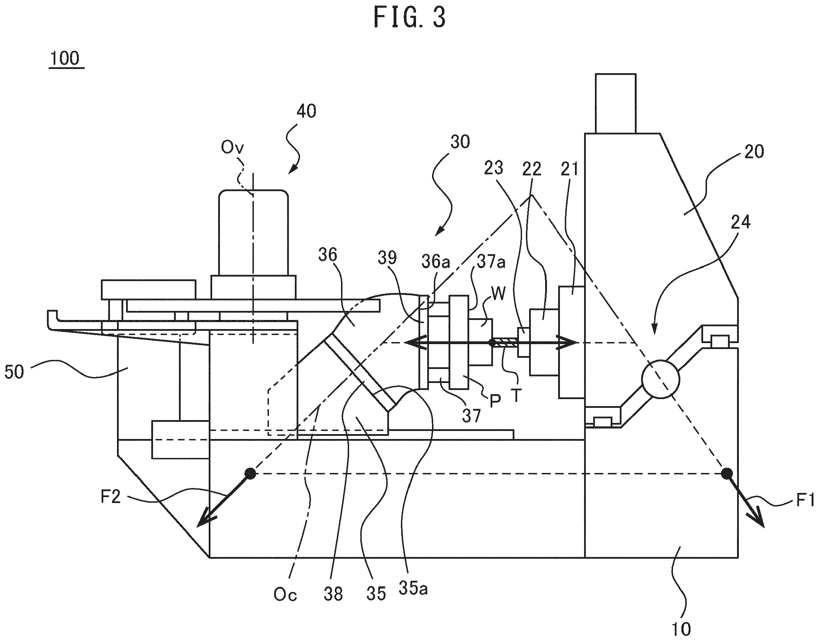

FIG. 3 is a right-side view showing the machine tool of FIG. 1 during machining. In the horizontal machining centre 100, the inclined linear motion guide 24 of the column 20 and the inclined rotational motion guide 38 of the table 30 are arranged so as to face each other in the Z-axis direction. From another point of view, the inclined linear motion guide 24 of the column 20 includes a portion which overlaps the inclined rotational motion guide 38 of the table 30 in the Y-axis direction (the vertical direction). Thus, when the workpiece W, which is attached to the pallet P, is machined by the tool T held by the spindle 23, as shown in FIG. 3, forces F1, F2 having components facing each other in the forward and rearward directions are generated on the column 20 side and the table 30 side, respectively. The forces F1, F2 press the bed 10 diagonally downward on the column 20 side and the table 30 side. The forces F1 and F2 have vertically downward components, and since these component forces press the bed 10 downward, the deformation amount of the bed 10 is small, and therefore this opposing inclined surface structure improves the rigidity of the column 20 and the table 30 in the front-rear direction and improves rigidity balance.

On the table 30 side, the position of, for example, the crossed roller bearing of the inclined rotational motion guide 38 is close to the machining point, whereby rigidity is increased. The rigidity on the column 20 side can be adjusted by adjusting the inclination angle of the inclined linear motion guide 24. Thus, by selectively designing the angle of inclination of the inclined linear motion guide 24, rigidity balance between the column 20 side and the table 30 side can be achieved. When rigidity balance is optimized, a high rigidity with respect to the weights of the column 20 and the table 30 is achieved, whereby a structure which is excellent in deftness and rigidity can be realized.

Referring to FIG. 1, in the table 30, the center of gravity G of the sum of the second table base 36 and the load on the second table base 36 (i.e., the pallet attachment base 37, the pallet P, and the workpiece) is positioned on the inclination axis Oc or in the vicinity of the inclination axis Oc. For example, in the table 30, when the weights of the pallet P and the workpiece correspond to the rated load, the center of gravity G can be set so as to be positioned on the inclination axis Oc, and when the table 30 supports a pallet P and workpiece having other weights, the center of gravity G can be positioned in the vicinity of the inclination axis Oc. In such a configuration, the rotational inertial about the inclination axis Oc is small. Thus, the acceleration/deceleration speed of rapid feeding in the C-axis direction can be increased, whereby the non-machining time can be shortened. Note that the method for positioning the center of gravity G in the vicinity of the inclination axis Oc includes, in the design stage, assuming that a workpiece having a standard shape and weight has been attached to a center portion of the pallet P, performing structural analysis of the table 30, and determining the shape of the second table base 36 so that the center of gravity G is positioned substantially on the inclination axis Oc. Thus, even if the shape, weight, and mounting position of the workpiece deviate from the assumptions, the position of the center of gravity G will not greatly deviate from the inclination axis Oc.

In the horizontal machining centre 100, the acceleration and jerk of the first table base 35 in the front and rear directions (Z-axis direction) are controlled in accordance with the position of the second table base 36 in the C-axis direction, like the movement of the column 20 shown in, for example, FIG. 4.

For example, the pallet rotation guide 39 can rotate in the range of 0° to 360° in the B-axis direction, while the second table base 36 is capable of rotating in the range of 0° (horizontal posture) to -90° (45° inclined posture) to -180° (vertical posture) (+ represents clockwise in a plan view, and - represents counterclockwise). The position of the center of gravity G shown in FIG. 1 may be positioned higher than the inclined rotational motion guide 38 when, for example, the workpiece attachment surface 37a is in the horizontal posture (C = 0°, FIG. 1), and may be positioned lower than the inclined rotational motion guide 38 when the workpiece attachment surface 37a is in the vertical posture (C = -180°C, FIG. 2), depending on the weights of the pallet P and the workpiece. Thus, the range -90° ≤ C ≤ 0° can be defined as higher center of gravity positions, and the range -180° ≤ C < - 90° can be defined as lower center of gravity positions.

When the second table base 36 is in a lower center of gravity position (-180° ≤ C < -90°), the impact caused by inertia acting on the table 30 when the table 30 is translationally moved is smaller. Thus, when the second table base 36 is in a lower center of gravity position (-180° ≤ C < -90°), the magnitudes of the acceleration and jerk of the first table base 35 are set to values greater than the reference values, and when the second table base 36 is in a higher center of gravity position (-90° ≤ C ≤ 0°), the magnitudes of the acceleration and jerk of the first table base 35 can be set to the reference values. It should be noted that, regarding the reference values of the acceleration and jerk, in the horizontal machining centre 100, since the center of gravity G is positioned close to the inclined rotational motion guide 38, the distance from the center of gravity G to the C-axis bearing is less than that of a conventional trunnion structure table having a tiltable table which is rotatable about a horizontal axis. Thus, in the horizontal machining centre 100, the first table base 35 can have reference values of acceleration and jerk having magnitudes which are larger as compared to a conventional trunnion structure table. Due to the structure described above, in the horizontal machining centre 100, in a C-axis position where the center of gravity is in a higher position, the impact and vibration exerted on the table 30 can be reduced, and in a C-axis position where the center of gravity is in a lower position, the acceleration/deceleration time of the table 30 can be shortened. Note that it should be understood that the specific values of the rotational movable range and positions of the second table base described above are merely exemplary, and other values may be used for the rotational movable range and the positions.

The pallet exchange device 40 is provided on the front of the bed 10. When the table 30 is in the pallet exchange position (the front stroke end E2 in the present embodiment), the pallet exchange device 40 exchanges the pallet P supported on the table 30 for the pallet P on the pallet loading station 50. The pallet exchange device 40 includes a bridge 41, a pallet exchange arm 42, and an arm drive device 43. The bridge 41 functions as a support base of the pallet exchange device 40.

The bridge 41 is provided on the bed 10 so as to straddle the table 30 in the direction (X-axis direction) orthogonal to the movement direction (Z-axis direction) of the table 30 at the front stroke end E2 of the table 30. The bridge 41 can have, for example, a roughly inverted U-shape, and can span the bed 10 from one end to the other in the X-axis direction so as to straddle the table 30. The bridge 41 straddles a part of the first table base 35 and a part of the second table base 36 of the table 30. The bridge 41 may be configured so as to straddle only the first table base 35. The bridge 41 is integrally formed with an oil pan 51 of the pallet loading station 50, which is described later. The bridge 41 and the oil pan 51 can be integrally formed by, for example, casting or the like.

The pallet exchange arm 42 is provided above the bridge 41 via the arm drive device 43. The pallet exchange arm 42 exchanges pellets by engaging with and raising the pallet P supported on the table 30 and the pallet P on the pallet loading station 50, rotating about the vertical axis Ov, and subsequently descending. The arm drive device 43 is provided on the bridge 41 and protrudes upwardly. The arm drive device 43 is configured so as to move the pallet exchange arm 42 upwards and downwards along the vertical axis Ov, and so as to rotate the pallet exchange arm 42 about the vertical axis Ov.

The pallet loading station 50 supports the pallet P. A machined workpiece and an unmachined workpiece are exchanged in the pallet loading station 50 by an operator or a robot. An oil pan 51 for preventing the dripping of cutting oil is arranged in the pallet loading station 50. As described above, the oil pan 51 is integrally formed with the bridge 41 of the pallet exchange device 40 by casting.

In the horizontal machining centre 100 according to the first embodiment described above, the inclined linear motion guide 24 of the column 20 and the inclined rotational motion guide 38 of the table 30 are arranged so as to face each other in the forward and backward directions (Z-axis direction). From another point of view, the inclined linear motion guide 24 of the column 20 includes a portion which overlaps the inclined rotational motion guide 38 of the table 30 in the vertical direction (i.e., the inclined linear motion guide 24 and the inclined rotational motion guide 38 include portions which overlap each other when viewed from the front). Thus, forces F1, F2 having components facing each other in the forward and rearward directions are generated on the column 20 side and the table 30 side, respectively. Therefore, a balance in rigidity between the column 20 and the table 30 in the forward and rearward directions can be achieved, and a concentration of deformation in either the column 20 or the table 30 can be prevented. Thus, the rigidity of the horizontal machining centre 100 as a whole can be increased.

Furthermore, in the horizontal machining centre 100, the center of gravity G of the sum of the second table base 36 and the load on the second table base 36 is configured so as to be positioned on the inclination axis Oc or in the vicinity of the inclination axis Oc. Thus, the distance of the center of gravity G from the inclination axis Oc is small, whereby the rotational inertia about the inclination axis Oc is reduced. In a conventional trunnion structure including a tiltable table which can rotate about a horizontal axis of rotation, the distance of the center of gravity from the axis of rotation is relatively large, whereby the rotational inertia is significant. Thus, conventional trunnion structures use a larger motor in order to rotate the table. In the machine tool 100, since the rotational inertia about the inclination axis Oc is smaller, a smaller motor can be used to rotate the second table base 36.

Furthermore, in the horizontal machining centre 100, at least one of acceleration a and jerk j of the column 20 in the left and right direction (X-axis direction) is controlled in accordance with the height of the spindle 23. When the column 20 moves, in the case in which the spindle 23 is in a lower position, a smaller impact is exerted on the column 20 as compared to the case in which the spindle 23 is in a higher position. Thus, by controlling at least one of acceleration a and jerk j of the column 20 in accordance with the height of the spindle 23, the impact and vibration on the column 20 can be reduced, and the acceleration/deceleration time of the column 20 can be shortened.

Furthermore, in the horizontal machining centre 100, one of the acceleration a and jerk j of the first table base 36 in the forward and rearward directions (Z-axis direction) is controlled in accordance with the position of the second table base 36 in the C-axis direction (i.e., the height of the second table base 36). When the table 30 moves, in the case in which the center of gravity G of the second table base 36 and the load on the second table base 36 is in a lower position, a smaller impact is imparted to the table 30 as compared to the case when the center of gravity G is in a higher position. Thus, by controlling at least one of the acceleration a and the jerk j of the table 30 in accordance with the height of the second table base 36, the impact and vibration on the table 30 can be reduced, and the acceleration/deceleration time of the table 30 can be shortened.

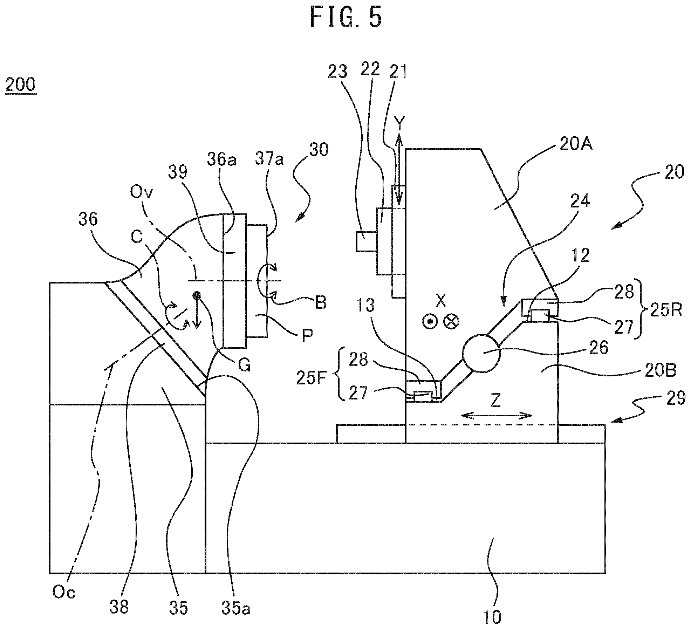

Next, a horizontal machining centre according to a second embodiment will be described. FIG. 5 is a right-side view of the machine tool according to the second embodiment. The horizontal machining centre 200 according to the second embodiment differs from the horizontal machining centre 100 according to the first embodiment in that the Z-axis direction guiding and feeding mechanisms are provided on the column 20 side. Furthermore, in the horizontal machining centre 200, the pallet exchange device 40 and the pallet loading station 50 are not provided. The other components of the horizontal machining centre 200 have the same structures as the corresponding components of the horizontal machining centre 100.

In the horizontal machining centre 200, the column 20 includes a first column portion 20A which is guided in the X-axis direction, and a second column portion 20B which is guided in the Z-axis direction. The first column portion 20A corresponds to the column 20 of the horizontal machining centre 100 of the first embodiment.

The inclined linear motion guide 24 described above is provided between the first column portion 20A and the second column portion 20B. In other words, in the horizontal machining centre 200, the support surfaces 12, 13 of the rails 27, 27 are formed on the second column portion 20B, instead of the bed 10.

The second column portion 20B moves on the bed 10 in the Z-axis direction along a pair of left and right guides 29 arrayed in the X-axis direction. Each guide 29 includes a rail affixed to the bed 10 and extending in the Z-axis direction, and a block affixed to the second column portion 20B. A ball screw connected to the motor is arranged between the guides 29 (not shown). The ball screw includes a threaded shaft which is rotatably supported by the bed 10 and which extends in the Z-axis direction, and a nut which is secured to the second column portion 20B. The nut is moved in the Z-axis direction by the rotation of the threaded shaft by the motor, whereby the column 20 is moved in the Z-axis direction. The amount of movement in the Z-axis direction is controlled by an NC device. In the horizontal machining centre 200, the first table base 35 of the table 30 is secured to the bed 10.

In the horizontal machining centre 200, in addition to the acceleration and jerk of the column 20 in the left and right directions (X-axis direction) described above, at least one of acceleration and jerk in the Z-axis direction may be controlled, in accordance with the height of the spindle 23, in, for example, the same manner as the movement shown in FIG. 4. In other words, when the spindle 23 is in a lower position, the magnitude of at least one of the acceleration and jerk of the column 20 in the Z-axis direction may be set to a value larger than the reference value, and when the spindle 23 is in a higher position, the magnitudes of the acceleration and jerk of the column 20 in the Z-axis direction may be set to the reference values.

In the horizontal machining centre 200 according to the second embodiment as described above, like the horizontal machining centre 100 according to the first embodiment, the inclined linear motion guide 24 of the column 20 and the inclined rotational motion guide 38 of the table 30 are arranged facing each other in the frontward and rearward directions (Z-axis direction). From another point of view, the inclined linear motion guide 24 of the column 20 includes a portion overlapping the inclined rotational motion guide 38 of the table 30 in the vertical direction. Thus, the rigidity of the horizontal machining centre 200 as a whole can be improved.

Furthermore, in the horizontal machining centre 200, the center of gravity G of the sum of the second table base 36 and the load on the second table base 36 is configured so as to be positioned on the inclination axis Oc or in the vicinity of the inclination axis Oc. Thus, a small motor can be used to rotate the second table base 36.

Furthermore, in the horizontal machining centre 200, like the horizontal machining centre 100 according to the first embodiment, at least one of the acceleration and jerk of the column 20 in the left and right directions (X-axis direction) is controlled in accordance with the height of the spindle 23. Furthermore, at least one of the acceleration and jerk of the column 20 in the frontward and rearward directions (Z-axis direction) is controlled in accordance with the height of the spindle 23. Thus, the impact and vibration on the column 20 can be reduced, and the acceleration/deceleration time of the column 20 can be shortened.

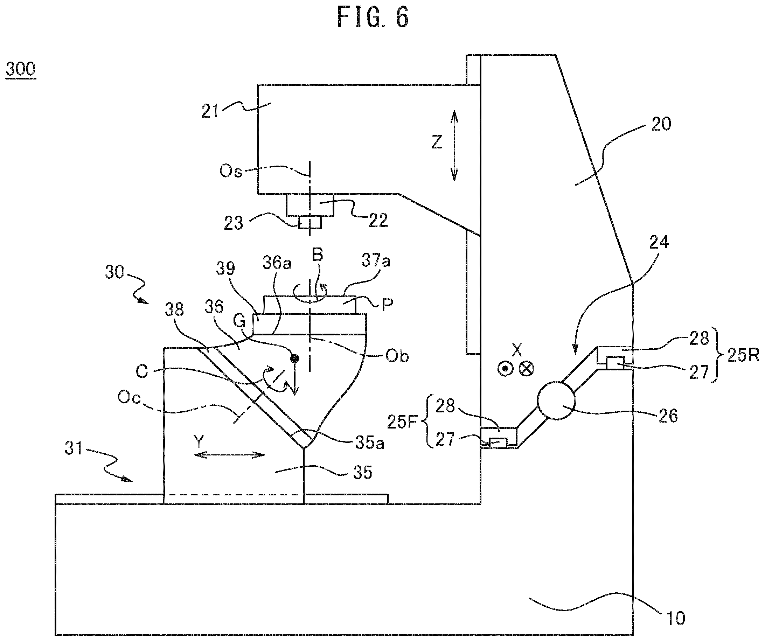

Next, a machine tool will be described. FIG. 6 is a right-side view of the machine tool. The machine tool 300 differs from the horizontal machining centre 100 according to the first embodiment in that the machine tool 300 is a vertical machining center. Furthermore, the machine tool 300 is not provided with a pallet exchange device 40 or a pallet loading station 50. The other components of the machine tool 300 can be configured in the same manner as the corresponding components of the horizontal machining centre 100.

In the machine tool 300, the saddle 21 protrudes forward from the front surface of the column 20. The spindle head 22 protrudes downward from the bottom surface of the saddle 21, and rotatably supports the spindle 23 about the vertical axis of rotation Os. Regarding the directions of the machine tool 300 according to the present embodiment, the direction parallel to the axis of rotation Os (the vertical direction) is defined as the Z-axis direction (also referred to as the upward and downward directions). Among the horizontal directions, the direction in which the saddle 21 protrudes from the column 20 is the Y direction (also referred to as the frontward and rearward direction). The direction in which the saddle 21 protrudes along the Y-axis direction is referred to as frontward, and the direction opposite thereto is referred to as rearward. The horizontal direction orthogonal to the Y-axis direction is defined as the X-axis direction (also referred to as the left and right directions).

In the machine tool 300 according to the third embodiment described above, like the machine tool 100 according to the first embodiment, the inclined linear motion guide 24 of the column 20 and the inclined rotational motion guide 38 of the table 30 are arranged so as to face each other in the forward and rearward directions (Y-axis direction). From another point of view, the inclined linear motion guide 24 of the column 20 includes a portion which overlaps with the inclined rotational motion guide 38 of the table 30 in the vertical direction. Thus, the rigidity of the machine tool 300 as a whole can be increased.

Furthermore, in the machine tool 300, the center of gravity G of the sum of the second table base 36 and the load on the second table base 36 is configured so as to be positioned on the inclination axis Oc or in the vicinity of the inclination axis Oc. Thus, a small motor can be used to rotate the second table base 36, and the impact during acceleration and deceleration when the table 30 moves in the Y-axis direction is reduced.

Furthermore, in the machine tool 300, at least one of the acceleration and jerk of the column 20 in the left and right directions (X-axis directions) is controlled in accordance with the height of the spindle 23. Thus, impact and vibration on the column 20 can be reduced, and the acceleration/deceleration time of the column 20 can be shortened.

Furthermore, in the machine tool 300, at least one of the acceleration and jerk of the first table base 35 in the frontward and rearward directions (Y-axis directions) is controlled in accordance with the position of the second table base 36 in the C-axis direction. Thus, the impact and vibration on the table 30 can be reduced, and the acceleration/deceleration time of the table 30 can be reduced.

Though the embodiments of the machine tool have been described, the present invention is not limited to the above embodiments. A person skilled in the art would understand that various modifications can be made to the embodiments described above, as long as they fall under the scope of the appended claims.

### REFERENCE SIGNS LIST

- 10: bed
- 20: column
- 22: spindle head
- 23: spindle
- 30: table
- 35: first table base
- 36: second table base
- 100: horizontal machining centre
- Oc: inclination axis
- P: pallet

## Claims

1. A horizontal machining centre (100) including three mutually orthogonal linear feed axes (X, Y, Z) and at least two rotary feed axes (B, C), the horizontal machining centre (100) comprising:
a base (10),
a column (20) that moves at least horizontally in the left and right (X-axis) directions on the base (10),
a spindle (23) which protrudes along the horizontal (Z) axis;
a spindle head (22) that moves in the vertical (Y-axis) direction on the column (20) and that rotatably supports the spindle (23), and
a table (30) that includes a workpiece mount provided on the base (10) in front of the column (20), wherein the workpiece mount includes a workpiece attachment surface (37a) to which a workpiece is attached, said workpiece attachment surface (37a) being rotationally fed in horizontal and vertical postures, and
an NC device configured to control feeding along the three mutually orthogonal linear feed axes (X, Y, Z) and the at least two rotary feed axes (B, C), wherein
the column (20) is guided in the left and right (X-axis) directions by a forwardly and upwardly inclined linear motion guide (24), and a rear part of the inclined linear motion guide (24) is arranged at a higher position than a front part of the inclined linear motion guide (24), wherein
the table (30) comprises:
a first table base (35) that includes a rearwardly and upwardly inclined rotational motion guide (38) and that is provided on the base (10), a front part of the inclined rotational motion guide (38) being arranged at a position higher than a rear part of the inclined rotational motion guide (38), and
a second table base (36) provided on the inclined rotational motion guide (38), the second table base (36) including the workpiece mount, said workpiece mount being rotationally fed about an inclination axis perpendicular to the inclined rotational motion guide (38), wherein
the first table base (35) is configured to move frontward and rearward in a horizontal (Z-axis) direction on the base (10) in front of the column (20), wherein
the workpiece mount is configured to rotate on the second table base (36) about a variable (B) axis inclined with respect to the inclination axis, wherein
the inclined linear motion guide (24) of the column (20) and the inclined rotational motion guide (38) of the table (30) are arranged so as to face each other, and wherein
the inclined linear motion guide (24) and the inclined rotational motion guide (38) include portions which overlap each other when viewed from the front.

2. The horizontal machining centre (100) according to claim 1, wherein a center of gravity (G) of the sum of the second table base (36) and a load on the second table base (36) is positioned on the inclination axis or in the vicinity of the inclination axis.

3. The horizontal machining centre (100) according to claim 1, wherein at least one of an acceleration and jerk of the left and right (X-axis) movements of the column (20) is set to a reference value when the vertical position of the spindle (23) is higher than a predetermined vertical position, and to a value higher than the reference value when the vertical position of spindle (23) is lower than the predetermined vertical position.

4. The horizontal machining centre (100) according to claim 1, wherein at least one of an acceleration and jerk of the frontward and rearward (Z-axis) movements of the first table base (35) is set to a reference value when the second table base (36) is in a higher centre of gravity position, and to a value higher than the reference value when the second table base (36) is in a lower centre of gravity position.

## Patentansprüche

1. Horizontales Bearbeitungszentrum (100) mit drei zueinander orthogonalen linearen Vorschubachsen (X, Y, Z) und mindestens zwei rotierenden Vorschubachsen (B, C), wobei das horizontale Bearbeitungszentrum (100) umfasst:
eine Basis (10),
eine Säule (20), die sich zumindest horizontal nach links und rechts (X-Achse) auf der Basis (10) bewegt,
eine Spindel (23), die entlang der horizontalen Achse (Z) vorsteht;
einen Spindelkopf (22), der sich in der vertikalen (Y-Achse) Richtung auf der Säule (20) bewegt und der die Spindel (23) drehbar trägt, und
einen Tisch (30), der eine Werkstückhalterung aufweist, die auf der Basis (10) vor der Säule (20) vorgesehen ist, wobei die Werkstückhalterung eine Werkstückbefestigungsfläche (37a) aufweist, an der ein Werkstück befestigt ist, wobei die Werkstückbefestigungsfläche (37a) in horizontalen und vertikalen Stellungen drehbar zugeführt wird, und
eine NC-Vorrichtung, die konfiguriert ist, um den Vorschub entlang der drei zueinander orthogonalen linearen Vorschubachsen (X, Y, Z) und der mindestens zwei rotierenden Vorschubachsen (B, C) zu steuern, wobei
die Säule (20) in der linken und rechten (X-Achse) Richtung durch eine nach vorne und nach oben geneigte lineare Bewegungsführung (24) geführt wird und ein hinterer Teil der geneigten linearen Bewegungsführung (24) an einer höheren Position als ein vorderer Teil der geneigten linearen Bewegungsführung (24) angeordnet ist, wobei
der Tisch (30) umfasst:
eine erste Tischbasis (35), die eine nach hinten und nach oben geneigte Drehbewegungsführung (38) aufweist und die auf der Basis (10) vorgesehen ist, wobei ein vorderer Teil der geneigten Drehbewegungsführung (38) an einer höheren Position als ein hinterer Teil der geneigten Drehbewegungsführung (38) angeordnet ist, und
eine zweite Tischbasis (36), die auf der geneigten Drehbewegungsführung (38) vorgesehen ist, wobei die zweite Tischbasis (36) die Werkstückhalterung enthält, wobei die Werkstückhalterung um eine Neigungsachse senkrecht zu der geneigten Drehbewegungsführung (38) drehend zugeführt wird, wobei
die erste Tischbasis (35) konfiguriert ist, um sich in einer horizontalen (Z-Achse) Richtung auf der Basis (10) vor der Säule (20) nach vorne und nach hinten zu bewegen, wobei
die Werkstückhalterung auf der zweiten Tischbasis (36) um eine zur Neigungsachse geneigte variable Achse (B) drehbar ausgebildet ist, wobei
die geneigte lineare Bewegungsführung (24) der Säule (20) und die geneigte Rotationsbewegungsführung (38) des Tisches (30) einander zugewandt angeordnet sind, und wobei
die geneigte lineare Bewegungsführung (24) und die geneigte Rotationsbewegungsführung (38) Abschnitte aufweisen, die sich von vorne gesehen überlappen.

2. Horizontales Bearbeitungszentrum (100) nach Anspruch 1, wobei ein Schwerpunkt (G) der Summe aus der zweiten Tischbasis (36) und einer Last auf der zweiten Tischbasis (36) auf der Neigungsachse oder in der Nähe der Neigungsachse liegt.

3. Horizontales Bearbeitungszentrum (100) nach Anspruch 1, wobei mindestens eine Beschleunigung oder ein Sprung der linken und rechten (X-Achse) Bewegung der Säule (20) auf einen Referenzwert eingestellt wird, wenn die vertikale Position der Spindel (23) höher als eine vorbestimmte vertikale Position ist, und auf einen Wert höher als der Referenzwert, wenn die vertikale Position der Spindel (23) niedriger als die vorbestimmte vertikale Position ist.

4. Horizontales Bearbeitungszentrum (100) nach Anspruch 1, wobei mindestens eine Beschleunigung oder ein Sprung der Vorwärts- und Rückwärts- (Z-Achse) Bewegung der ersten Tischbasis (35) auf einen Referenzwert eingestellt wird, wenn sich die zweite Tischbasis (36) in einer höheren Schwerpunktposition befindet, und auf einen Wert höher als der Referenzwert, wenn sich die zweite Tischbasis (36) in einer niedrigeren Schwerpunktposition befindet.

## Revendications

1. Centre d'usinage horizontal (100) comprenant trois axes d'alimentation linéaires mutuellement orthogonaux (X, Y, Z) et au moins deux axes d'alimentation rotatifs (B, C), le centre d'usinage horizontal (100) comprenant :
une base (10),
une colonne (20) qui se déplace au moins horizontalement dans les directions gauche et droite (axe X) sur la base (10),
une broche (23) qui fait saillie le long de l'axe horizontal (Z),
une tête de broche (22) qui se déplace dans la direction verticale (axe Y) sur la colonne (20) et qui supporte, de manière rotative, la broche (23), et
une table (30) qui comprend un support de pièce à usiner prévu sur la base (10) en face de la colonne (20), dans lequel le support de pièce à usiner comprend une partie de fixation de pièce à usiner (37a) sur laquelle une pièce à usiner est fixée, ladite surface de fixation de pièce à usiner (37a) étant alimentée, de manière rotative, dans les postures horizontale et verticale, et
un dispositif NC configuré pour commander l'alimentation le long des trois axes d'alimentation linéaires mutuellement orthogonaux (X, Y , Z) et des au moins deux axes d'alimentation rotatifs (B, C), dans lequel la colonne (20) est guidée dans les directions gauche et droite (axe X) par un guide de mouvement linéaire incliné vers l'avant et vers le haut (24), et une partie arrière du guide de mouvement linéaire incliné (24) est agencée dans une position plus haute qu'une partie avant du guide de mouvement linéaire incliné (24), dans lequel :
la table (30) comprend :
une première base de table (35) qui comprend un guide de mouvement de rotation incliné vers l'arrière et vers le haut (38) et qui est prévu sur la base (10), une partie avant du guide de mouvement de rotation incliné (38) étant agencée dans une position plus haute qu'une partie arrière du guide de mouvement de rotation incliné (38), et
une seconde base de table (36) prévue sur le guide de mouvement de rotation incliné (38), la seconde base de table (36) comprenant le support de pièce à usiner, ledit support de pièce à usiner étant alimenté, de manière rotative, autour d'un axe d'inclinaison perpendiculaire au guide de mouvement de rotation incliné (38), dans lequel :
la première base de table (35) est configurée pour se déplacer vers l'avant et vers l'arrière dans une direction horizontale (axe Z) sur la base (10) en face de la colonne (20), dans lequel :
le support de pièce à usiner est configuré pour tourner sur la seconde base de table (36) autour d'un axe variable (B) incliné par rapport à l'axe d'inclinaison, dans lequel :
le guide de mouvement linéaire incliné (24) de la colonne (20) et le guide de mouvement de rotation incliné (38) de la table (30) sont agencés pour se faire face, et dans lequel :
le guide de mouvement linéaire incliné (24) et le guide de mouvement de rotation incliné (38) comprennent des parties qui se chevauchent, lorsqu'elles sont observées de face.

2. Centre d'usinage horizontal (100) selon la revendication 1, dans lequel un centre de gravité (G) de la somme de la seconde base de table (36) et d'une charge sur la seconde base de table (36) est positionné sur l'axe d'inclinaison ou à proximité de l'axe d'inclinaison.

3. Centre d'usinage horizontal (100) selon la revendication 1, dans lequel au moins l'une parmi une accélération et une suraccélération des mouvements gauche et droit (axe X) de la colonne (20) est réglée sur une valeur de référence lorsque la position verticale de la broche (23) est plus haute qu'une position verticale prédéterminée, et sur une valeur supérieure à la valeur de référence lorsque la position verticale de la broche (23) est plus basse que la position verticale prédéterminée.

4. Centre d'usinage horizontal (100) selon la revendication 1, dans lequel au moins l'une parmi une accélération et une suraccélération des mouvements vers l'avant et vers l'arrière (axe Z) de la première base de table (35) est réglée sur une valeur de référence lorsque la seconde base de table (36) est dans une position de centre de gravité plus haute, et sur une valeur supérieure à la valeur de référence lorsque la seconde base de table (36) est une position de centre de gravité plus basse.
